(19)

Europäisches
Patentamt
European
Patent Office
Office européen
des brevets

(11) **EP 2 869 506 B1**

(12) **EUROPEAN PATENT SPECIFICATION**

(45) Date of publication and mention
of the grant of the patent:
**24.08.2016 Bulletin 2016/34**

(51) Int Cl.:
***H04L 12/717*** *(2013.01)*   ***H04L 12/911*** *(2013.01)*
***H04L 12/24*** *(2006.01)*   ***H04L 12/815*** *(2013.01)*

(21) Application number: **14190027.4**

(22) Date of filing: **23.10.2014**

(54) **Congestion avoidance and fairness in data networks with multiple traffic sources**

Überlastungsvermeidung und Fairness in Datennetzwerken mit mehreren Verkehrsquellen

Équité et évitement de congestion dans des réseaux de données avec de multiples sources de trafic

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.11.2013 US 201361899230 P
07.10.2014 US 201414507851**

(43) Date of publication of application:
**06.05.2015 Bulletin 2015/19**

(73) Proprietor: **Oliver Solutions Ltd.
4672211 Herzliya (IL)**

(72) Inventors:
 • **Spector, Oren
  3298414 Haifa (IL)**

 • **Kaplan, Menachem
  6918441 Tel Aviv (IL)**

(74) Representative: **Lavoix
Bayerstrasse 83
80335 München (DE)**

(56) References cited:
**WO-A1-2006/090369    US-A1- 2013 258 847**

 • **"Split Architecture for Large Scale Wide Area
  Networks - Deliverable D3.3 ED - Wolfgang John",**
  INTERNET CITATION, August 2012 (2012-08),
  pages 1-129, XP002701201, Retrieved from the
  Internet:
  URL:http://www.fp7-sparc.eu/assets/deliver
  ables/SPARC_D3.3_Split_Architecture_for_La
  rge_Scale_Wide_Area_Networks.pdf [retrieved
  on 2013-07-10]

**Description**

FIELD OF THE INVENTION

The present invention relates to data networks and software defined networking (SDN).

BACKGROUND OF THE INVENTION

US 2013/258847 A1 discloses a controller performs network-wide congestion control in a split architecture network. The controller receives flow statistics from switches for each entity that communicates via the network. The controller chooses a most congested link as a bottleneck link based on a packet loss rate that is derived from the flow statistics and estimated for each entity on each link of the network. The controller identifies a target path in the network that passes through the bottleneck link and carries the most traffic, and calculates a throttling probability for each sharing entity that shares the target path based on the capacity of the bottleneck link, capacity of the first link of the target path, bandwidth consumption and packet loss rate of each sharing entity.; The controller then transmits the throttling probability of each sharing entity to the ingress switch of the target path to reduce the congestion on the bottleneck link.

WO 2006/090369 A1 concerns a configurable edge device for use in a network, the edge device being adapted and configured to be coupled to at least one other edge device in a network, and including an admission controller for controlling admission of data traffic onto a pre-defined flow over a physical link, and a router for routing the data traffic through the edge device onto the pre-defined flow in accordance with a pre-defined routing scheme, wherein operation of the admission controller and the router is controlled in accordance with data defining all physical and logical links in the network; a telecommunications carrier network for data traffic, the network including at least two such configurable edge devices, and a method for transmitting data traffic through such an edge device.

Data networks are comprised of network nodes, and fixed-capacity links that connect the nodes. Capacity of a link is generally measured in units of bandwidth such as bits/sec. A provider network is a data network through which customers access the Internet and other services, including inter alia voice, video, on-line gaming, file sharing, data backup and cloud storage.

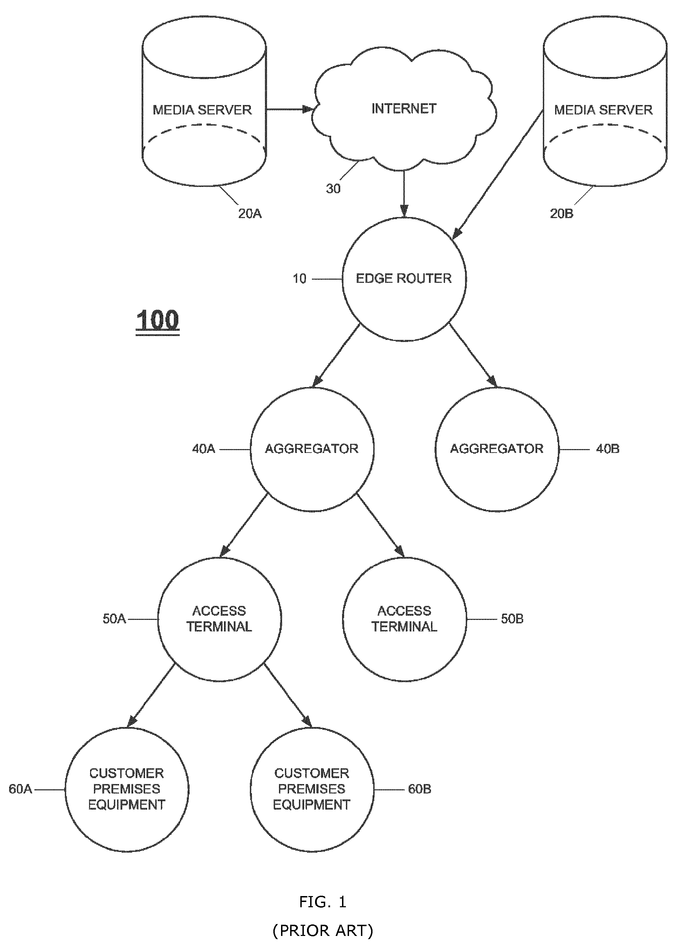

Reference is made to **FIG. 1,** which is a prior art diagram of a provider data network **100.** Provider network **100** has a single network node **10,** referred to as an edge router, which serves as the customers' point of access to the provided services. Data traffic flowing from the edge router to the customer is referred to as downstream traffic, and traffic flowing in the opposite direction is called upstream traffic.

As shown in **FIG. 1,** media server **20A** is connected to edge router **10** via Internet **30,** and media server **20B** is connected to edge router **10** directly. Edge router **10** is connected to aggregation devices **40A** and **40B.** Aggregation device **40A** is connected to access terminals **50A** and **50B.** Examples of access terminals include:

- OLT -- inter alia optical line terminals, which are service provider endpoints of passive optical networks;
- CMTS -- cable modem termination system terminals for high-speed data services such as cable Internet and voice over IP; and
- DSLAM -- digital subscriber line access multiplexer terminals.

Access terminal **50A** is connected to customer premises equipment (CPE) **60A** and **60B.**

Network operators strive to use as much as possible of a network's capacity, yet to avoid congestion in the network. Network congestion degrades quality of service for customers who use the network, and leads to low effective utilization of the network due to re-transmissions. Network operators sign service level agreements (SLA's) with customers, and strive to enforce the SLA's in their network and ensure fairness among their customers.

Downstream traffic is directed from media servers **20A** and **20B,** and from Internet **30,** to CPEs **60A** and **60B,** through network **100,** by a semi-static tree structure. Specifically, as long as a network link does not fail, downstream traffic to a specific CPE always traverses the same path of network nodes. Edge router **10** identifies the destination CPE of each downstream frame that enters edge router **10,** and stores each frame in a downstream queue that is associated with that destination CPE. In order to avoid congestion, ensure fairness among customers, and optimize network utilization, edge router **10** employs hierarchical traffic management, using a hierarchical scheduling and policing tree that has the same structure as that of the provider network. I.e., the root of the tree is the edge router, the vertices of the tree are the network nodes, the leaves of the tree are the downstream queues of the edge router, and the edges of the tree are network links through which downstream traffic flows between network nodes. The edge router shapes traffic flowing through a link according to the link's capacity; e.g., according to a percentage of the maximal link capacity, or according to a service level agreement in case the link is connected directly to a customer. The edge router shapes traffic by determining a data traffic rate $Redge_{n,m}$ for the downstream link from node $n$ to node $m$, for some or all of the linked network nodes $n$ and $m$, and by ensuring the these traffic rates do not exceed the link capacities.

Upstream traffic is controlled by algorithms such as dynamic bandwidth allocation. However, such control is generally limited to links directly connected to CPEs. Other control algorithms, such as Resource Reservation Protocol, allocate bandwidth along a path between the CPE and the edge router. However, such control generally results in limited network utilization.

A large portion of downstream traffic in provider networks is media - video, in particular. Conventionally, media servers **10A** and **10B** are located on the upstream side of edge router **10,** so that all media traffic passes through the edge router **10.** As a result, edge router **10** becomes overloaded. Moreover, as customers expect higher video quality, the bandwidth consumed by video in a provider network becomes larger. In turn, this necessitates enlarging the capacities of edge routers.

In addition to overloading edge routers, directing media traffic through edge routers has other drawbacks.

1. Edge routers perform deep packet inspection and sophisticated hierarchical scheduling and policing, resulting in higher cost-per-bit than other devices, such as aggregation devices. Furthermore, media traffic requires only minimal processing, does not need to be shaped, and cannot be extensively delayed or lost. As such, passing media traffic through an edge router is wasteful of an expensive resource, and unnecessary.

2. Conventionally, media services are located on the upstream side of edge routers, despite the fact that placing media servers, or caches of media servers, closer to customers who consume the media would improve their user experience; nevertheless, the rationale is to enable the edge router to be aware of all downstream traffic flowing to customers, so that the edge router can avoid congestion in the provider network.

Flow control mechanisms, referred to variously as back-pressure and congestion indication, are standardized, and have been implemented over the years in various packet/cell communication technologies. Flow control mechanisms perform reasonably well in avoiding congestion for small-scale networks having few flows. However, flow control has several drawbacks.

1. Flow control provides per flow indications, whereas the congested entity is a network component, most often a link.

2. Flow control is qualitative, reporting flow congestion. As such, tuning traffic management to avoid congestion is a trial-and-error process with prolonged convergence and inefficient network resource utilization.

3. Flow control is not scalable. No device can process flow control for tens of thousands of flows.

In fact, the above deficiencies were the reason that hierarchical traffic management, currently used by edge routers, was introduced - the rationale being that since flow control cannot resolve congestion as it occurs, then congestion must be avoided altogether. To accomplish this, all data traffic addressed to any specific broadband branch, undergoes hierarchical traffic management taking into account various bottlenecks along its route.

To sum up the situation,

1. Flow control is inadequate. Flow control does not scale, and provides poor resource utilization.

2. Hierarchical traffic management is an over-kill. Hierarchical traffic management performs well, but is excessively expensive if traversed by the entire data traffic.

As such, it would be of advantage to control traffic in a way that overcomes the scalability limitation of flow control, and avoids congestion when multiple traffic sources are present in the network.

SUMMARY OF THE DESCRIPTION

Aspects of the present invention relate to a traffic controller according to claim 1, a data network according to claim 10 and a nen-transitory computer readable medium according to claim 11. The dependent claims concern particular embodiments of the invention. The systems for controlling data traffic avoid congestion in a network that has multiple sources of traffic. Moreover, the sources may introduce traffic into the network downstream of an edge router. These systems and methods are scalable, and overcome the scalability limitations of flow control.

Embodiments of the present invention provide a novel network controller, which periodically gathers statistical traffic data from networks nodes and from one or more edge routers in a data network, and which uses these statistics to analyze traffic distribution from traffic sources on various network links. The controller calculates permitted capacities, i.e., maximum allowed rates, on links downstream of the edge routers. The thus-calculated permitted capacities are in turn used to dynamically configure the hierarchical scheduling and policing tree of one or more of the edge routers, thereby ensuring that the edge routers prevent traffic congestion in the network, and ensuring fairness among customers - despite the edge routers being located upstream of where the traffic sources enter the network.

The present invention is of particular advantage for software-defined networks (SDNs), which separate the data plane from the control plane.

There is thus provided in accordance with an embodiment of the present invention a traffic controller for a data network that includes a plurality of network nodes, a plurality of network links connecting the network nodes, and one or more edge routers, each edge router being configured to control network traffic based on permitted link capacities, and wherein one or more sources of downstream traffic data enter the network downstream of the one or more edge routers, the traffic controller including a receiver operable to periodically receive downstream transmission byte counts from at least some of the network nodes, a processor coupled with the receiver, operable to periodically update the permitted link capacities based on the network node downstream byte counts received by the receiver, and a transmitter coupled with the processor operable to periodically transmit the thus-updated permitted link capacities to the one or more edge routers for their use in controlling the network traffic.

There is additionally provided in accordance with an embodiment of the present invention a non-transitory computer readable medium storing a computer program with computer program code, which, when read by a controller device, causes the controller device to perform a method for controlling traffic in a data network that includes a plurality of network nodes, a plurality of network links connecting the network nodes, and one or more edge routers, each edge router being configured to control network traffic based on permitted link capacities, and wherein one or more sources of downstream traffic data enter the network downstream of the one or more edge routers, the method including periodically receiving downstream transmission byte counts from at least some of the network nodes, periodically updating permitted link capacities based on the network node downstream byte counts received by the periodically receiving, and periodically transmitting the thus-updated permitted link capacities, calculated by the periodically updating, to the one or more edge routers for their use in controlling the network traffic.

## BRIEF DESCRIPTION OF THE DRAWINGS

The present invention will be more fully understood and appreciated from the following detailed description, taken in conjunction with the drawings in which:

FIG. 1 is a prior art diagram of a provider data network;
FIG. 2 is a simplified block diagram of an enhanced data network with media servers entering the network downstream of an edge router, in accordance with an embodiment of the present invention;
FIG. 3 is a simplified block diagram of an enhanced data network with a traffic controller, in accordance with an embodiment of the present invention;
FIG. 4 is a simplified block diagram of an enhanced data network with two edge routers and a traffic controller, in accordance with an embodiment of the present invention;
FIG. 5 is a simplified block diagram of the traffic controller of FIGS. 3 and 4, in accordance with an embodiment of the present invention; and
FIG. 6 is a simplified flowchart of a method performed by the traffic controller of FIGS. 3 and 4, in accordance with an embodiment of the present invention.

## DETAILED DESCRIPTION

Aspects of the present invention relate to a novel network controller, which enables edge routers to prevent traffic congestion in the network and ensure fairness among customers, despite the edge routers being located upstream of where network traffic sources such as media servers enter the network.

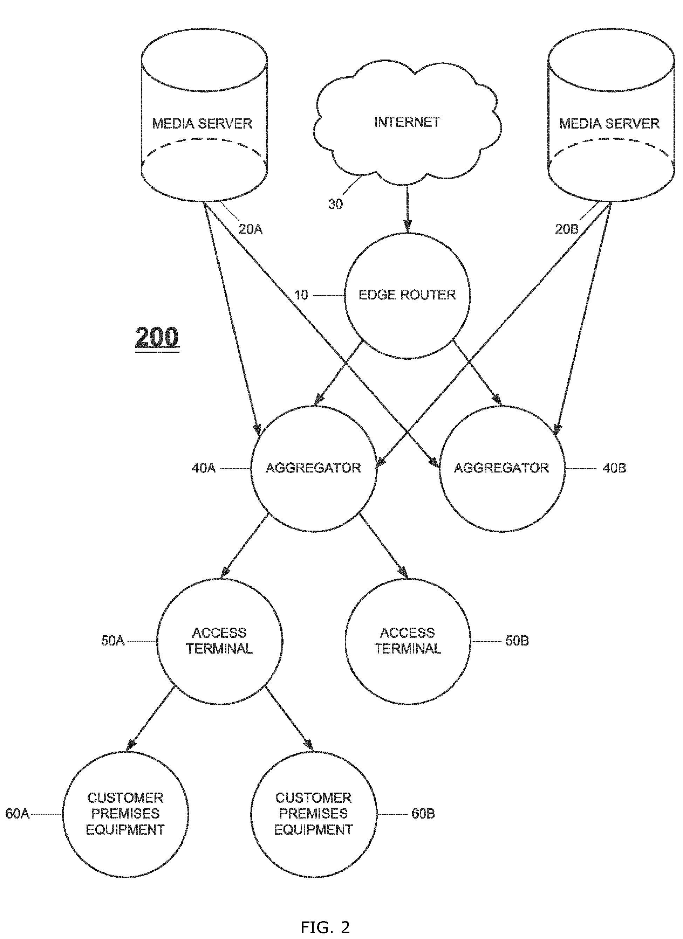

Reference is made to FIG. 2, which is a simplified block diagram of an enhanced data network 200 with media servers 20A and 20B entering network 200 downstream of edge router 10, in accordance with an embodiment of the present invention. Data network 200 may be inter alia a passive optical network, a cable network, a digital subscriber network, or a software-defined network.

As shown in FIG. 2, edge router 10 is offloaded, by connecting media servers 20A and 20B directly to aggregators 40A and 40B. The connection between the media servers and the aggregators may be a physical connection, and may be a connection that uses an optical transport network (OTN). Connecting media servers 20A and 20B directly to aggregators 40A and 40B has the important advantage of improving the user experience for customers who consume the media.

Edge router 10 cannot perform congestion avoidance and ensure fairness in network 200, since it is not aware of the media traffic generated by media servers 20A and 20B that flows through the network to CPEs 60A and 60B. Indeed, edge router 10 cannot determine the data traffic rates, since the sources of the data traffic do not flow into edge router 10. As such, conventional hierarchical scheduling and shaping cannot be used in system 200 to prevent congestion.

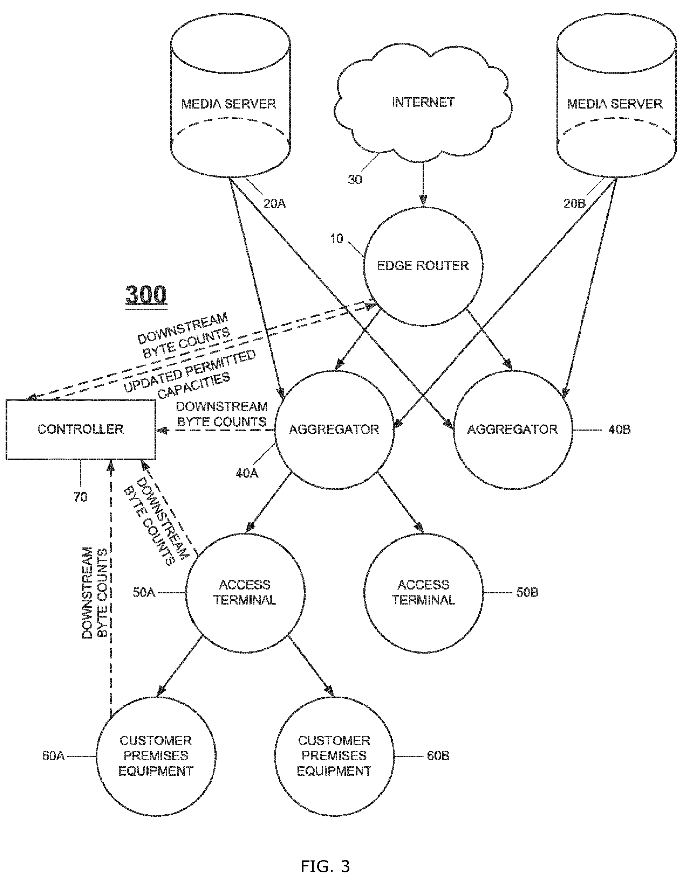

Reference is made to FIG. 3, which is a simplified block diagram of an enhanced data network 300 with a traffic controller 70, in accordance with an embodiment of the present invention. Controller 70 gathers statistics from some or all of the various network nodes, and from edge router **10**. Controller **70** uses these statistics to dynamically configure edge router **10** so as to avoid congestion.

Controller **70** may be an additional network node added to the system, or alternatively it may be an existing network node that adopts the role of a controller. Controller **70** is a standard management entity, including inter alia a simple network management protocol (SNMP) manager or a software-defined network (SDN) controller, or an application over an SDN controller. Alternatively, controller **70** is a proprietary management entity.

Controller **70** collects information and statistical data from other network nodes, using a standard protocol including inter alia remote network monitoring (RMON), SNMP, operations administration and monitoring (OAM) protocol, and the Broadband Forum TR-69 management protocol. Alternatively, controller **70** collects the information and statistical data using proprietary protocols.

Controller **70** reads information from other network nodes, the information including inter alia, for each network node, one or more of:

> I. a unique identifier for the network node;
> II. network links available to the network node, their capacities, and the identifiers of their peer network nodes; and
> III. received and transmitted byte counters, per network link connected to the network node.

It is noted that information I and II suffices for controller **70** to reconstruct the network topology. Alternatively, the network topology may be provided in advance to controller **70.**

Controller **70** writes to the hierarchical scheduling and policing tree of edge router **10,** and reads information from the tree, including one or more of:

> IV. transmitting downstream byte counter at each tree edge *nm;* and
> V. transmitted downstream byte counter at each tree leaf *l*.

Controller **70** periodically identifies changes in the topology and link capacity information, and adjust its decisions. When such changes are identified, controller **70** notifies an operator that the discovered topology and link capacities do not match the edge router hierarchical scheduling tree. Further, when such changes are identified, controller **70** updates the edge router hierarchical scheduling, based on the updated topology and link capacity information, and notifies the operator accordingly.

The following notation is introduced.

$Tx_l(t)$ - the downstream transmitted byte counter at time *t* of leaf *l*;

$Tx_{n,m}(t)$ - the downstream transmitted byte counter at time *t* of node *n* towards downstream node *m*;

$Corig_{n,m}$ - the originally set permitted capacity of the edge from node *n* to downstream node *m*; and

$C_{n,m}$ - the current permitted capacity of the edge from node *n* to downstream node *m*.

Since downstream traffic is distributed in a tree structure, it is noted that

$$Tx_{n,m} = \begin{cases} \sum_{edges\ m,k} Tx_{m,k}(t), & if\ m\ is\ not\ a\ leaf \\ Tx_l(t), & if\ l\ is\ a\ leaf \end{cases} . \qquad \textbf{(1)}$$

**EQ. 1** may be applied recursively to derive the counters $Tx_{n,m}(t)$ from the counters $Tx_l(t)$. As such, information V suffices to determine information IV.

Upon initialization, controller **70** reads the initial hierarchical scheduling and policing tree configuration, including the tree structure and the original edge capacities $Corig_{n,m}$.

In accordance with an embodiment of the present invention, controller **70** periodically reads available information from the network nodes and from edge router **10,** and derives traffic rates $R_{n,m}$ from node *n* to downstream node *m*, in accordance with the formula

$$R_{n,m} = \frac{Tx_{n,m}(t_1) - Tx_{n,m}(t_0)}{t_1 - t_0} . \qquad \textbf{(2)}$$

**EQ. 2** uses information III from the network nodes, and information IV or V from edge router **10**. Denoting, as above, the data traffic rates determined by edge router **10** by $Redge_{n,m}$, it is noted that $Redge_{n,m} \leq R_{n,m}$, and $Redge_{n,m} \leq Corig_{n,m}$. If information III is permanently not available to controller **70**, then controller **70** sets the rate $R_{n,m} = Redge_{n,m}$. If information III is temporarily not available to controller **70,** then controller **70** uses a prediction based on previous information III that was available, to determine the rate $R_{n,m;}$ e.g., a predictor based on a sliding window average or based on linear approximation.

After calculating the rates $R_{n,m}$, controller **70** dynamically updates the current permitted capacities $C_{n,m}$ of each edge of the hierarchical scheduling and policing tree, according to the formula

$$C_{n,m} = \max\{Corig_{n,m} - (R_{n,m} - Redge_{n,m}), 0\} . \qquad (3)$$

The updated edge capacities $C_{n,m}$ in accordance with **EQ. 3** are then used to dynamically update the configuration of edge router **10,** thereby avoiding traffic congestion in the network nodes that receive traffic from edge router **10.** It will be appreciated by those skilled in the art that use of **EQ. 3** enables edge router **10** to accommodate sources of data traffic, such as media servers **20A** and **20B,** which do not flow through edge router **10.**

Updating of capacities and updating of the configuration of edge router **10** are preferably performed frequently enough to follow traffic source rate changes, but without overloading the network nodes with statistics requests.

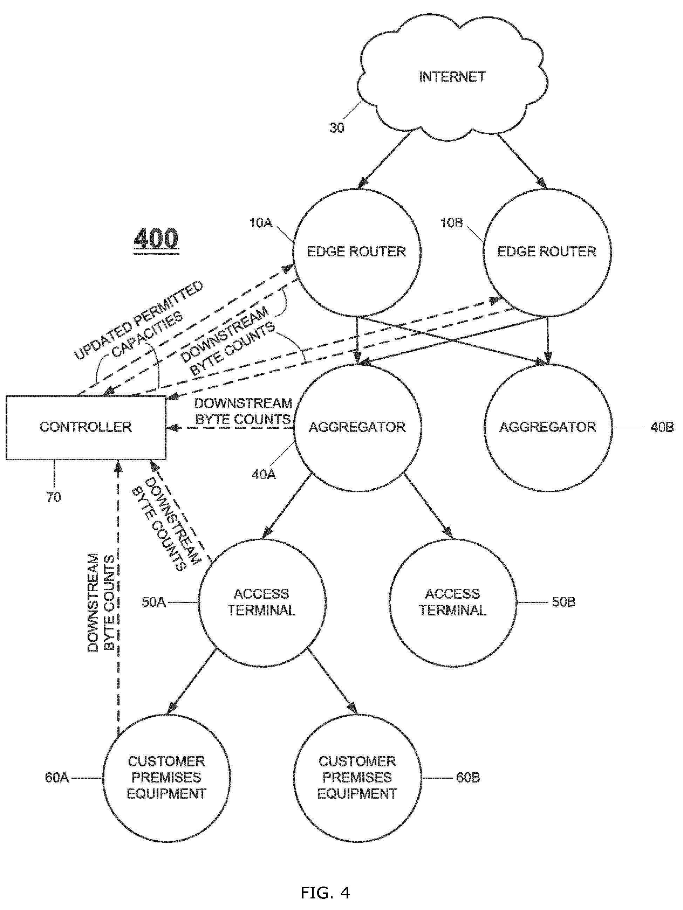

Reference is made to **FIG. 4,** which is a simplified block diagram of an enhanced data network **400** with traffic controller **70,** and with two edge routers **10A** and **10B** that share the network capacity, in accordance with an embodiment of the present invention. Controller **70** gathers statistics from some or all of the various network nodes, and from edge routers **10A** and **10B.** Controller **70** uses these statistics to dynamically configure edge routers **10A** and **10B** so as to avoid congestion.

When two or more edge routers are present in the network, such as edge routers **10A** and **10B,** the capacity updating procedure of **EQ. 3** is performed for each edge router. It is noted, however, that the node calculations need only be performed once.

It is further noted that if one edge router, say edge router **10A,** becomes inactive, then controller **70** instructs the other edge router, namely, edge router **10B,** to use the entire network capacity. It will be appreciated by those skilled in the art that this serves as a failure protection mechanism for the network.

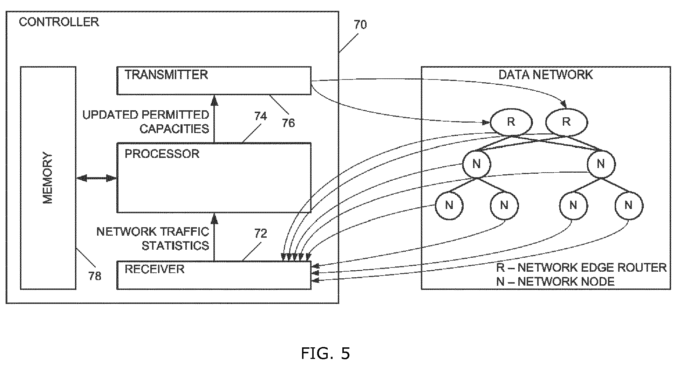

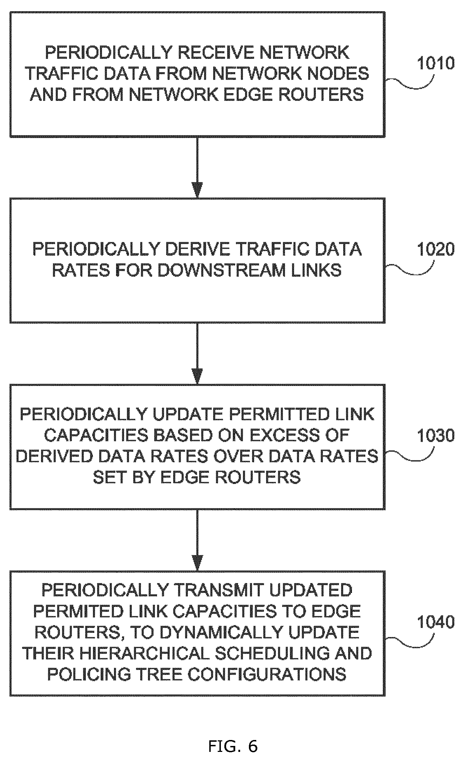

Reference is made to **FIG. 5,** which is a simplified block diagram of traffic controller **70,** in accordance with an embodiment of the present invention. As shown in **FIG. 5,** controller **70** includes four primary components. A receiver **72** periodically receives statistical traffic data from some or all of the nodes in a data network, the statistical traffic data including byte counter data $Tx_l(t)$ and $Tx_{n,m}(t)$, discussed above. A processor **74** uses the byte counter data to periodically derive traffic rates $R_{n,m}$ in accordance with **EQ. 2,** and to periodically update permitted edge capacities $c_{n,m}$ in accordance with **EQ. 3.** The updated permitted edge capacities incorporate traffic sources that enter the network downstream of the edge routers. A transmitter **76** transmits the updated permitted edge capacities to one or more edge routers in the data network, for dynamically updating their hierarchical scheduling and policing tree configurations so as to accommodate the updated permitted edge capacities and thereby prevent congestion. A memory **78** stores the program code instructions that are executed by processor **74** to perform the method shown below in **FIG. 6,** which controls receiver **72,** performs the processing for updating the permitted link capacities, and controls transmitter **76.**

Transmitter **76** queries the nodes for their statistics, for the next calculation cycle. In an alternative embodiment of the present invention, controller **70** configures the nodes to periodically send their statistics to transmitter **76.**

**FIG. 6** is a simplified flowchart of a method performed by traffic controller **70,** in accordance with an embodiment of the present invention. At operation **1010,** controller **70** periodically receives network traffic data from network nodes and from network edge routers. The received data includes byte counter data $Tx_l(t)$ and $Tx_{n,m}(t)$, discussed above. At operation **1020,** controller **70** periodically derives traffic data rates $R_{n,m}$ in accordance with **EQ. 2.** At operation **1030,** controller **70** periodically updates the permitted edge capacities $C_{n,m}$ in accordance with **EQ. 3.** The updated permitted edge capacities incorporate traffic sources that enter the network downstream of the edge routers. At operation **1040,** controller **70** periodically transmits the updated permitted edge capacities $C_{n,m}$ to the edge routers, for dynamically updating their hierarchical scheduling and policing tree configurations so as to accommodate the updated permitted edge capacities and thereby prevent congestion.

It will be appreciated by those skilled in the art that the present invention has broad application to any data network that supports two or more network nodes that pass traffic from one or more sources into the network, such that one or more of the traffic sources has a connection to a device capable of performing hierarchical schedule and shaping, and such that some or all of the network nodes are capable of providing statistics regarding traffic passing through them.

In the foregoing specification, the invention has been described with reference to specific exemplary embodiments thereof. It will, however, be evident that various modifications and changes may be made to the specific exemplary embodiments without departing from the broader spirit and scope of the invention as set forth in the appended claims. Accordingly, the specification and drawings are to be regarded in an illustrative rather than a restrictive sense.

**Claims**

1.  A traffic controller (70) for a data network (200, 300, 400) that comprises a plurality of network nodes (40A, 40B, 50A, 50B, N), a plurality of network links connecting the network nodes, a plurality of access links connecting customer premises equipment (60A, 60B) and one or more edge routers (10, 10A, 10B, R), each edge router (10, 10A, 10B) being configured to control network traffic by periodically updating permitted link capacities based on customer service level agreements, wherein the customer service level agreements specify original permitted link capacities,, and wherein media traffic generated by one or more sources (20A, 20B) of downstream traffic data enter the network downstream of the one or more edge routers, the traffic controller comprising:

    a receiver (72) operable to periodically receive (1010) downstream transmission byte counts from at least some of the network nodes downstream of said edge routers;
    a processor (74) coupled with said receiver, operable to periodically update (1030) the permitted link capacities based on the network node downstream byte counts received by said receiver; and
    a transmitter (76) coupled with said processor operable to periodically transmit (1040) the thus-updated permitted link capacities to the one or more edge routers for their use in controlling the network traffic.

2.  The traffic controller of claim **1** wherein said processor (74) is operable to periodically derive (1020) downstream data rates as differences in network node downstream byte counts over time intervals divided by the lengths of the time intervals, and to use the thus-derived downstream data rates to update the permitted link capacities.

3.  The traffic controller of claim **2** wherein the permitted link capacities are updated by subtracting excesses of the downstream data rates derived by said processor (74) over the downstream data rates derived by edge routers, from the original permitted link capacities specified by the customer service level agreements.

4.  The traffic controller of any one of the preceding claims further comprising a network connection, for connecting the traffic controller with the at least some of the network nodes (40A, 40B, 50A, 50B, 60A, 60B, N).

5.  The traffic controller of any one of the preceding claims, wherein said receiver uses the remote network monitoring (RMON) protocol, the simple network management protocol (SNMP), the operations administration and monitoring (OAM) protocol, or the Broadband Forum TR-69 management protocol.

6.  The traffic controller of any one of the preceding claims, wherein the traffic controller is itself one of the plurality of network nodes.

7.  The traffic controller of any one of the preceding claims, wherein the data network (200, 300, 400) comprises a passive optical network, a cable network, a digital subscriber network, or a software-defined network (SDN).

8.  The traffic controller of any one of the preceding claims, wherein the data network (200, 300, 400) comprises a provider network that provides at least one of voice services, video services, on-line gaming services, file sharing services, data backup services, and cloud storage services.

9.  The traffic controller of any one of the preceding claims, wherein said receiver, said processor and said transmitter are operable to periodically receive, calculate and transmit, respectively, at time intervals of approximately 100 ms.

10. A data network with a controller in accordance with any one of the preceding claims, for preventing traffic congestion, the data network (200, 300, 400) comprising:

    a plurality of network nodes (40A, 40B, 50A, 50B, N);
    a plurality of network links connecting the network nodes;
    a plurality of access links connecting customer premises equipment (60A, 60B)
    one or more edge routers, each edge router being configured to control network traffic by periodically updating permitted link capacities based on customer service level agreements, wherein the customer service level agreements specify original permitted link capacities; and
    the traffic controller of any one of the preceding claims,

    wherein media traffic generated by one or more sources (20A, 20B) of downstream traffic data enter the network downstream of the one or more edge routers.

11. A non-transitory computer readable medium storing a computer program with computer program code, which, when read by a controller device, causes the controller device to perform a method for controlling traffic in a data network (200, 300, 400) that comprises a plurality of network nodes (40A, 40B, 50A, 50B, N), a plurality of access links connecting customer premises equipment (60A, 60B), a plurality of network links connecting the network nodes, and one or more edge routers, each edge router (10, 10A, 10B, R) being configured to control network traffic by periodically updating permitted link capacities based on customer service level agreements, wherein the customer service level agreements specify original permitted link capacities, and wherein media traffic generated by one or more sources (20A, 20B) of downstream traffic data enter the network downstream of the one or more edge routers, the method comprising:

    periodically receiving (1010) downstream transmission byte counts from at least some of the network nodes (40A, 40B, 50A, 50B, N) downstream of the edge routers;
    periodically updating (1030) the permitted link capacities based on the network node downstream byte counts received by said periodically receiving; and
    periodically transmitting (1040) the thus-updated permitted link capacities, calculated by said periodically updating, to the one or more edge routers for their use in controlling the network traffic.

12. The computer readable medium of claim **11** wherein the method further comprises periodically deriving (1020) downstream data rates as differences in network node downstream byte counts over time intervals divided by the lengths of the time intervals, and wherein said periodically updating uses the downstream data rates derived by said periodically deriving, to calculate the updated permitted link capacities.

13. The computer readable medium of claim **12** wherein said periodically updating comprises periodically subtracting excesses of the downstream data rates derived by said periodically deriving over the downstream data rates derived by edge routers (10, 10A, 10B, R), from the original set permitted link capacities specified by the customer service level agreements.

14. The computer readable medium of any one of the claims **11 to 13** wherein said periodically receiving uses the remote network monitoring (RMON) protocol, the simple network management protocol (SNMP), the operations administration and monitoring (OAM) protocol, or the Broadband Forum TR-69 management protocol.

15. The computer readable medium of any one of the claims **11** to 14 wherein the computer program code causes the controller device to perform said periodically receiving, said periodically updating and said periodically transmitting at time intervals of approximately 100 ms.

**Patentansprüche**

1. Verkehrssteuereinheit (70) für ein Datennetz (200, 300, 400), umfassend eine Mehrzahl von Netzknoten (40A, 40B, 50A, 50B, N), eine Mehrzahl von Netzanbindungen, die die Netzknoten verbinden, eine Mehrzahl von Zugriffsanbindungen, die Geräte am Kundenstandort (60A, 60B) verbinden, und einen oder mehrere Edge-Router (10, 10A, 10B), wobei jeder Edge-Router (10, 10A, 10B) so konfiguriert ist, dass er Netzverkehr durch periodisches Aktualisieren von zugelassenen Anbindungskapazitäten auf Basis von Kunden-Service-Level-Vereinbarungen steuert, wobei die Kunden-Service-Level-Vereinbarungen ursprüngliche zugelassene Anbindungskapazitäten festlegen, und wobei Medienverkehr, der von einer oder mehreren Quellen (20A, 20B) nachgeschalteter Verkehrsdaten generiert wird, dem einen oder den mehreren Edge-Routern nachgeschaltet in das Netz eintritt, wobei die Verkehrssteuereinheit umfasst:

    einem Empfänger (72), der so betreibbar ist, dass er nachgeschaltete Übertragungsbyteanzahlen von zumindest manchen der den Edge-Routern nachgeschalteten Netzknoten periodisch empfängt (1010);
    einen mit dem Empfänger verbundenen Prozessor (74), der so betreibbar ist, dass er die zugelassenen Anbindungskapazitäten auf Basis der dem Netzknoten nachgeschalteten Byteanzahlen, die vom Empfänger empfangen werden, periodisch aktualisiert (1030); und
    einen mit dem Prozessor verbundenen Sender (76), der so betreibbar ist, dass er die auf diese Weise aktualisierten zugelassenen Anbindungskapazitäten periodisch an den einen oder die mehreren Edge-Router sendet (1040), damit diese bei der Steuerung des Netzverkehrs verwendet werden.

2. Verkehrssteuereinheit nach Anspruch 1, wobei der Prozessor (74) so betreibbar ist, dass er nachgeschaltete Datenraten als Differenzen in dem Netzknoten nachgeschalteten Byteanzahlen über Zeitintervalle, geteilt durch die Längen der Zeitintervalle, ableitet (1020) und die auf diese Weise abgeleiteten nachgeschalteten Datenraten verwendet, um die zugelassenen Anbindungskapazitäten zu aktualisieren.

3. Verkehrssteuereinheit nach Anspruch 2, wobei die zugelassenen Anbindungskapazitäten durch Subtrahieren von Überschüssen der nachgeschalteten Datenraten, die vom Prozessor (74) abgeleitet wurden, über die von Edge-Routern abgeleiteten nachgeschalteten Datenraten, von den ursprünglichen zugelassenen Anbindungskapazitäten, die durch die Kunden-Service-Level-Vereinbarungen festgelegt sind, aktualisiert werden.

4. Verkehrssteuereinheit nach einem der vorstehenden Ansprüche, die des Weiteren eine Netzverbindung umfasst, um die Verkehrssteuereinheit mit den zumindest manchen der Netzknoten (40A, 40B, 50A, 50B, 60A, 60B, N) zu verbinden.

5. Verkehrssteuereinheit nach einem der vorstehenden Ansprüche, wobei der Empfänger das Remote-Network-Monitoring-(RMON-)Protokoll, das Simple-Network-Management-Protokoll (SNMP), das Operations-Administration-and-Monitoring-(OAM-)Protokoll oder das Broadband-Forum-TR-69-Management-Protokoll verwendet.

6. Verkehrssteuereinheit nach einem der vorstehenden Ansprüche, wobei die Verkehrssteuereinheit selbst einer der Mehrzahl von Netzknoten ist.

7. Verkehrssteuereinheit nach einem der vorstehenden Ansprüche, wobei das Datennetz (200, 300, 400) ein passives optisches Netz, ein Kabelnetz, ein digitales Teilnehmernetz oder ein softwaredefiniertes Netz (SDN) umfasst.

8. Verkehrssteuereinheit nach einem der vorstehenden Ansprüche, wobei das Datennetz (200, 300, 400) ein Anbieternetz umfasst, das zumindest eines von Sprachdiensten, Videodiensten, Online-Spiele-Diensten, Filesharing-Diensten, Datensicherungsdiensten und Cloud-Speicher-Diensten bereitstellt.

9. Verkehrssteuereinheit nach einem der vorstehenden Ansprüche, wobei der Empfänger, der Prozessor und der Sender so betreibbar sind, dass sie in Zeitintervallen von ungefähr 100 ms periodisch empfangen, berechnen bzw. senden.

10. Datennetz mit einer Steuereinheit nach einem der vorstehenden Ansprüche zum Verhindern von Verkehrsüberlastung, wobei das Datennetz (200, 300, 400) umfasst:

eine Mehrzahl von Netzknoten (40A, 40B, 50A, 50B, N);
eine Mehrzahl von Netzanbindungen, die die Netzknoten verbinden;
eine Mehrzahl von Zugangsanbindungen, die Geräte am Kundenstandort (60A, 60B) verbinden
einen oder mehrere Edge-Router, wobei jeder Edge-Router so konfiguriert ist, dass er Netzverkehr durch periodisches Aktualisieren von zugelassenen Anbindungskapazitäten auf Basis von Kunden-Service-Level-Vereinbarungen steuert, wobei die Kunden-Service-Level-Vereinbarungen ursprüngliche zugelassene Anbindungskapazitäten festlegen; und
die Verkehrssteuereinheit nach einem der vorstehenden Ansprüche,
wobei Medienverkehr, der von einer oder mehreren Quellen (20A, 20B) nachgeschalteter Verkehrsdaten generiert wird, dem einen oder den mehreren Edge-Routern nachgeschaltet in das Netz eintritt.

11. Nicht-flüchtiges computerlesbares Medium, das ein Computerprogramm mit einem Computerprogrammcode speichert, der, wenn er von einer Steuereinrichtung gelesen wird, die Steuereinrichtung dazu veranlasst, ein Verfahren zum Steuern von Verkehr in einem Datennetz (200, 300, 400) durchzuführen, das eine Mehrzahl von Netzknoten (40A, 40B, 50A, 50B, N), eine Mehrzahl von Zugriffsanbindungen, die Geräte am Kundenstandort (60A, 60B) verbinden, eine Mehrzahl von Netzanbindungen, die die Netzknoten verbinden, und einen oder mehrere Edge-Router umfasst, wobei jeder Edge-Router (10, 10A, 10B, R) so konfiguriert ist, dass er Netzverkehr durch periodisches Aktualisieren von zugelassenen Anbindungskapazitäten auf Basis von Kunden-Service-Level-Vereinbarungen steuert, wobei die Kunden-Service-Level-Vereinbarungen ursprüngliche zugelassene Anbindungskapazitäten festlegen, und wobei Medienverkehr, der von einer oder mehreren Quellen (20A, 20B) nachgeschalteter Verkehrsdaten generiert wird, dem einen oder den mehreren Edge-Routern nachgeschaltet in das Netz eintritt, wobei das Verfahren umfasst:

periodisches Empfangen (1010) von nachgeschalteten Übertragungsbyteanzahlen von zumindest manchen der den Edge-Routern nachgeschalteten Netzknoten (40A, 40B, 50A, 50B, N);

periodisches Aktualisieren (1030) der zugelassenen Anbindungskapazitäten auf Basis der dem Netzknoten nachgeschalteten Byteanzahlen, die durch das periodische Empfangen empfangen werden; und

periodisches Senden (1040) der auf diese Weise aktualisierten zugelassenen Anbindungskapazitäten, die durch das periodische Aktualisieren berechnet werden, an den einen oder die mehreren Edge-Router, damit diese bei der Steuerung des Netzverkehrs verwendet werden.

12. Computerlesbares Medium nach Anspruch 11, wobei das Verfahren des Weiteren das periodische Ableiten (1020) von nachgeschalteten Datenraten als Differenzen in dem Netzknoten nachgeschalteten Byteanzahlen über Zeitintervalle, geteilt durch die Längen der Zeitintervalle, umfasst, und wobei das periodische Aktualisieren die nachgeschalteten Datenraten, die durch das periodische Ableiten abgeleitet werden, zur Berechnung der aktualisierten zugelassenen Anbindungskapazitäten verwendet.

13. Computerlesbares Medium nach Anspruch 12, wobei das periodische Aktualisieren das periodische Subtrahieren von Überschüssen der nachgeschalteten Datenraten, die durch das periodische Ableiten über die von Edge-Routern (10, 10A, 10B, R) abgeleiteten nachgeschalteten Datenraten abgeleitet werden, von den ursprünglichen eingestellten zugelassenen Anbindungskapazitäten, die durch die Kunden-Service-Level-Vereinbarungen festgelegt sind, umfasst.

14. Computerlesbares Medium nach einem der Ansprüche 11 bis 13, wobei das periodische Empfangen das Remote-Network-Monitoring-(RMON-)Protokoll, das Simple-Network-Management-Protokoll (SNMP), das Operations-Administration-and-Monitoring-(OAM-)Protokoll oder das Broadband-Forum-TR-69-Management-Protokoll verwendet.

15. Computerlesbares Medium nach einem der Ansprüche 11 bis 14, wobei der Computerprogrammcode die Steuereinrichtung dazu veranlasst, das periodische Empfangen, das periodische Aktualisieren und das periodische Senden in Zeitintervallen von ungefähr 100 ms durchzuführen.

**Revendications**

1. Contrôleur de trafic (70) pour un réseau de données (200, 300, 400) qui comprend une pluralité de noeuds de réseau (40A, 40B, 50A, 50B, N), une pluralité de liaisons de réseau connectant les noeuds de réseau, une pluralité de liaisons d'accès connectant un équipement des locaux d'abonné (60A, 60B), et un ou plusieurs routeurs de périphérie (10, 10A, 10B, R), chaque routeur de périphérie (10, 10A, 10B) étant configuré de manière à commander le trafic de réseau en mettant à jour de façon périodique des capacités de liaisons permises, sur la base d'accords de niveau de service de client, dans lequel les accords de niveau de service de client spécifient des capacités de liaisons permises d'origine, et dans lequel le trafic multimédia généré par une ou plusieurs sources (20A, 20B) de données de trafic en aval entre dans le réseau en aval dudit un ou desdits plusieurs routeurs de périphérie, le contrôleur de trafic comprenant :

un récepteur (72) exploitable de manière à recevoir de façon périodique (1010) des comptages d'octets de transmission en aval en provenance d'au moins certains des noeuds de réseau en aval desdits routeurs de périphérie ;

un processeur (74) couplé audit récepteur, exploitable de manière à mettre à jour de façon périodique (1030) les capacités de liaisons permises, sur la base des comptages d'octets en aval de noeuds de réseau reçus par ledit récepteur ; et

un émetteur (76), couplé audit processeur, exploitable de manière à transmettre de façon périodique (1040) les capacités de liaisons permises ainsi mises à jour, audit un ou auxdits plusieurs routeurs de périphérie, en vue de leur utilisation dans le cadre de la commande du trafic de réseau.

2. Contrôleur de trafic selon la revendication 1, dans lequel ledit processeur (74) est exploitable de manière à dériver de façon périodique (1020) des débits de données en aval, en tant que des différences en termes de comptages d'octets en aval de noeuds de réseau sur des intervalles de temps divisés par les longueurs des intervalles de temps, et à utiliser les débits de données en aval ainsi dérivés en vue de mettre à jour les capacités de liaisons permises.

3. Contrôleur de trafic selon la revendication 2, dans lequel les capacités de liaisons permises sont mises à jour en soustrayant des débits de données en aval en excès, dérivés par ledit processeur (74), par rapport aux débits de données en aval dérivés par des routeurs de périphérie, des capacités de liaisons permises d'origine spécifiées par les accords de niveau de service de client.

4. Contrôleur de trafic selon l'une quelconque des revendications précédentes, comprenant en outre une connexion de réseau, destinée à connecter le contrôleur de trafic auxdits au moins certains des noeuds de réseau (40A, 40B, 50A, 50B, 60A, 60B, N).

5. Contrôleur de trafic selon l'une quelconque des revendications précédentes, dans lequel ledit récepteur utilise le protocole de surveillance de réseau à distance (RMON), le protocole simple de gestion de réseau (SNMP), le protocole d'exploitation, administration et maintenance (OAM), ou le protocole de gestion basé sur la norme TR-069 du forum large bande.

6. Contrôleur de trafic selon l'une quelconque des revendications précédentes, dans lequel le contrôleur de trafic correspond lui-même à un noeud de la pluralité de noeuds de réseau.

7. Contrôleur de trafic selon l'une quelconque des revendications précédentes, dans lequel le réseau de données (200, 300, 400) comprend un réseau optique passif, un réseau de câbles, un réseau d'abonné numérique ou un réseau défini par logiciel (SDN).

8. Contrôleur de trafic selon l'une quelconque des revendications précédentes, dans lequel le réseau de données (200, 300, 400) comprend un réseau de fournisseur qui fournit au moins l'un parmi des services vocaux, des services vidéo, des services de jeu en ligne, des services de partage de fichiers, des services de sauvegarde de données, et des services de stockage en nuage.

9. Contrôleur de trafic selon l'une quelconque des revendications précédentes, dans lequel ledit récepteur, ledit processeur et ledit émetteur sont exploitables de manière à recevoir, calculer et transmettre, de façon périodique, respectivement, à des intervalles de temps d'environ 100 ms.

10. Réseau de données avec un contrôleur selon l'une quelconque des revendications précédentes, destiné à empêcher un encombrement du trafic, le réseau de données (200, 300, 400) comprenant :

   une pluralité de noeuds de réseau (40A, 40B, 50A, 50B, N) ;
   une pluralité de liaisons de réseau connectant les noeuds de réseau ;
   une pluralité de liaisons d'accès connectant un équipement des locaux d'abonné (60A, 60B) ;
   un ou plusieurs routeurs de périphérie, chaque routeur de périphérie étant configuré de manière à commander le trafic de réseau en mettant à jour de façon périodique des capacités de liaisons permises, sur la base d'accords de niveau de service de client, dans lequel les accords de niveau de service de client spécifient des capacités de liaisons permises d'origine ; et
   le contrôleur de trafic selon l'une quelconque des revendications précédentes ;

   dans lequel le trafic multimédia généré par une ou plusieurs sources (20A, 20B) de données de trafic en aval entre dans le réseau en aval dudit un ou desdits plusieurs routeurs de périphérie.

11. Support lisible par ordinateur non transitoire stockant un programme informatique avec du code de programme informatique qui, lorsqu'il est lu par un dispositif de contrôleur, amène le dispositif de contrôleur à mettre en oeuvre un procédé de commande de trafic dans un réseau de données (200, 300, 400) qui comprend une pluralité de noeuds de réseau (40A, 40B, 50A, 50B, N), une pluralité de liaisons d'accès connectant un équipement des locaux d'abonné (60A, 60B), une pluralité de liaisons de réseau connectant les noeuds de réseau, et un ou plusieurs routeurs de périphérie, chaque routeur de périphérie (10, 10A, 10B, R) étant configuré de manière à commander le trafic de réseau en mettant à jour de façon périodique des capacités de liaisons permises, sur la base d'accords de niveau de service de client, dans lequel les accords de niveau de service de client spécifient des capacités de liaisons permises d'origine, et dans lequel le trafic multimédia généré par une ou plusieurs sources (20A, 20B) de données de trafic en aval entre dans le réseau en aval dudit un ou desdits plusieurs routeurs de périphérie, le procédé comprenant les étapes ci-dessous consistant à :

   recevoir de façon périodique (1010) des comptages d'octets de transmission en aval en provenance d'au moins certains des noeuds de réseau (40A, 40B, 50A, 50B, N) en aval des routeurs de périphérie ;

mettre à jour de façon périodique (1030) les capacités de liaisons permises, sur la base des comptages d'octets en aval de noeuds de réseau reçus au cours de ladite étape de réception périodique ; et
transmettre de façon périodique (1040) les capacités de liaisons permises ainsi mises à jour, calculées au cours de ladite étape de mise à jour périodique, audit un ou auxdits plusieurs routeurs de périphérie, en vue de leur utilisation dans le cadre de la commande du trafic de réseau.

**12.** Support lisible par ordinateur selon la revendication 11, dans lequel le procédé comprend en outre l'étape consistant à dériver de façon périodique (1020) des débits de données en aval, en tant que des différences en termes de comptages d'octets en aval de noeuds de réseau sur des intervalles de temps divisés par les longueurs des intervalles de temps, et dans lequel ladite étape de mise à jour périodique utilise les débits de données en aval, dérivés au cours de ladite étape de dérivation périodique, en vue de calculer les capacités de liaisons permises mises à jour.

**13.** Support lisible par ordinateur selon la revendication 12, dans lequel ladite étape de mise à jour périodique comprend l'étape consistant à soustraire de façon périodique les débits de données en aval en excès, dérivés au cours de ladite étape de dérivation périodique, par rapport aux débits de données en aval dérivés par des routeurs de périphérie (10, 10A, 10B, R), des capacités de liaisons permises définies d'origine spécifiées par les accords de niveau de service de client.

**14.** Support lisible par ordinateur selon l'une quelconque des revendications 11 à 13, dans lequel ladite étape de réception périodique fait appel au protocole de surveillance de réseau à distance (RMON), au protocole simple de gestion de réseau (SNMP), au protocole d'exploitation, administration et maintenance (OAM), ou au protocole de gestion basé sur la norme TR-069 du forum large bande.

**15.** Support lisible par ordinateur selon l'une quelconque des revendications 11 à 14, dans lequel le code de programme informatique amène le dispositif de contrôleur à mettre en oeuvre ladite étape de réception périodique, ladite étape de mise à jour périodique et ladite étape de transmission périodique, à des intervalles de temps d'environ 100 ms.

FIG. 1

(PRIOR ART)

**200**

FIG. 2

FIG. 3

FIG. 4

FIG. 5

PERIODICALLY RECEIVE NETWORK TRAFFIC DATA FROM NETWORK NODES AND FROM NETWORK EDGE ROUTERS — 1010

PERIODICALLY DERIVE TRAFFIC DATA RATES FOR DOWNSTREAM LINKS — 1020

PERIODICALLY UPDATE PERMITTED LINK CAPACITIES BASED ON EXCESS OF DERIVED DATA RATES OVER DATA RATES SET BY EDGE ROUTERS — 1030

PERIODICALLY TRANSMIT UPDATED PERMITED LINK CAPACITIES TO EDGE ROUTERS, TO DYNAMICALLY UPDATE THEIR HIERARCHICAL SCHEDULING AND POLICING TREE CONFIGURATIONS — 1040

FIG. 6

**EP 2 869 506 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013258847 A1

- WO 2006090369 A1